# EUROPÄISCHE PATENTANMELDUNG

(11) **EP 2 594 336 A1**
(43) Veröffentlichungstag der Anmeldung: **22.05.2013**
(21) Anmeldenummer: 11190006.4
(22) Anmeldetag: 21.11.2011
(51) Int. Cl.: B02C 13/22, B02C 13/288, B02C 23/12

(54) **Verfahren und Vorrichtung zum Zerkleinern von mineralischen Stoffen sowie mineralischer Stoff**

(71) Anmelder: Schirmbrand, Helmut, 3372 Blindenmarkt (AT)
(72) Erfinder: Schirmbrand, Helmut, 3372 Blindenmarkt (AT)
(74) Vertreter: HOFFMANN EITLE

(57) **Zusammenfassung**

Bei einem Verfahren zum Zerkleinern von mineralischen Stoffen wird das Mahlgut zwischen gegenläufigen Mahlscheiben (32, 34) gemahlen und mittels eines Gasstroms mit von 10.000 bis 13.000 m³/h und/oder einer Geschwindigkeit von mindestens 26 m/s weitertransportiert.

Es wird ferner eine Vorrichtung zum Zerkleinern von mineralischen Stoffen offenbart, mit zumindest einer Mühle (6) mit gegenläufigen Mahlscheiben (32, 34) und zumindest einem Ventilator (7), der geeignet ist, einen Gasstrom mit mindestens 10.000 m³/h und/oder einer Geschwindigkeit von mindestens 20 m/s in die Mühle einzublasen, um das Mahlgut weiterzutransportieren.

## Beschreibung

### Technisches Gebiet

Die Erfindung betrifft eine Vorrichtung und ein Verfahren zum Zerkleinern von mineralischen Stoffen, wie z.B. Hüttensand, Kalkstein oder Zeolithe sowie einen mineralischen Stoff mit einer besonders hohen Feinheit.

Als Bindemittel für die Betonherstellung werden mineralische Stoffe, wie z.B. Kalkstein und Hüttensand verwendet, für die festgestellt wurde, dass man die Menge derartiger Zusatzstoffe bezogen auf eine bestimmte Menge Beton verringern kann, oder sich die Festigkeit des Betons bei der gleichen Menge von Zusatzstoff erhöht, wenn die Zusatzstoffe besonders fein sind, mit anderen Worten eine besonders kleine Partikelgröße aufweisen. Dieses Ziel gilt auch für zermahlenen Bauschutt, der ebenfalls Beton zugesetzt werden kann, sowie für Aluminiumoxid oder Zeolithe, wobei letztere insbesondere in Futtermitteln verwendet werden.

### Stand der Technik

Bislang wurden die genannten Stoffe, wie z.B. Beton-Bindemittel mit Kugelmühlen zermahlen.

In der DE 28 29 272 A1 wird für ein Verfahren zur Regenerierung und Reaktivierung inaktiv gewordenen Zements ein sogenannter Desintegrator vorgeschlagen, bei dem es sich um eine Stiftmühle handelt. Hierbei sind auf gegenläufigen Scheiben in kreisförmigen Reihen Schlagstifte angeordnet, die das Mahlgut durch den Aufprall zerkleinern.

### Darstellung der Erfindung

Der Erfindung liegt die Aufgabe zugrunde, ein verbessertes Verfahren und eine verbesserte Vorrichtung zum Zerkleinern von mineralischen Stoffen zu schaffen. Ferner wird hierin ein besonders feiner mineralischer Stoff beschrieben.

Die Lösung der oben genannten Aufgabe erfolgt zum einen durch das im Patentanspruch 1 beschriebene Verfahren.

Demzufolge wird der mineralische Stoff als das Mahlgut zwischen zwei gegenläufigen Mahlscheiben gemahlen und mittels eines Gasstromes von ca. 10.000 bis 13.000 m³/Std. pro 10 Tonnen pro Stunde Mahlgut weitertransportiert. Mit anderen Worten ist der genannte Gasstrom bei einer Menge von 10 Tonnen pro Stunde in eine Mühle eingebrachtes Mahlgut erforderlich. Wenn die Mühle derart vergrößert wird, dass sich die Menge des eingebrachten Mahlgutes um einen bestimmten Faktor erhöht, erhöht sich der genannte Gasstrom zumindest annähernd um diesen Faktor. Es sei jedoch erwähnt, dass pro Mahlgang lediglich etwa 30 bis 50 Prozent des Ausgangs-Mahlgutes die gewünschte Feinheit aufweisen und dementsprechend weitertransportiert werden. Die gröberen Anteile werden rezirkuliert und mit zwischenzeitlich zugefügtem "frischem" Mahlgut erneut gemahlen.

Bei dem Gas handelt es sich bevorzugt um Luft. Es können jedoch auch andere geeignete Gase zum Einsatz kommen. Die Mahlscheiben drehen sich bevorzugt um eine horizontale Achse und weisen bevorzugt auf einer Seite, also in einer Richtung drehend, zumindest eine innere und zumindest eine äußere Mahlscheibe auf, die sich gemeinsam in eine bestimmte Richtung drehen. Zwischen die beiden Mahlscheiben eingreifend und sich in die andere Richtung drehend ist eine mittlere Mahlscheibe vorgesehen. Außerhalb der genannten "äußeren" Mahlscheibe können weitere konzentrisch vorgesehene und ineinander eingreifende Mahlscheiben vorhanden sein. Die beschriebene Mühle kann wegen der Gegenläufigkeit der beiden Mahlscheiben als "Gegenstrornmizhle" mit "Gegenstromlaufrädern" bezeichnet werden.

Für die äußere Mahlscheibe wird derzeit ein Außendurchmesser von 1.050 bis 1.100 mm, insbesondere etwa 1.070 mm, und ein Innendurchmesser von 870 bis 910 mm, insbesondere etwa 890 mm bevorzugt. Die mittlere Mahlscheibe weist bevorzugt einen Außendurchmesser von 825 bis 865 mm, und insbesondere etwa 844 mm sowie einen Innendurchmesser von etwa 670 bis 710 mm, insbesondere etwa 689 mm auf. Für die innere Mahlscheibe schließlich wird derzeit ein Außendurchmesser von 620 bis 660 mm und insbesondere etwa 640 mm und ein Innendurchmesser von 480 bis 520 mm und insbesondere 502 mm bevorzugt.

Der mineralische Stoff wird im oberen Bereich in das Laufradgehäuse der Gegenstrommühle zwischen die Mahlscheiben gefördert, und das Innere der Mühle wird mit dem oben genannten Gasmassenstrom beaufschlagt. Hierdurch erfolgt der Weitertransport des zerkleinerten und zumindest teilweise die gewünschte Teilchengröße aufweisenden Mahlgutes. Durch den Weitertransport mittels eines Gasstromes wird gewährleistet, dass lediglich die besonders feinen Anteile weitertransportiert werden.

Im Rahmen von ersten Versuchen konnte festgestellt werden, dass sich bislang nicht bekannte Feinheiten erreichen lassen. Diese liegen insbesondere bei mehr als 5000 Blaine. Mit anderen Worten 1 Gramm des gemahlenen Stoffes weist eine Fläche von 5000 cm² oder mehr auf. Mit dem erfindungsgemäßen Verfahren wurden insbesondere Feinheiten von mehr als 8000 Blaine und bis zu 14000 Blaine erreicht. Die Partikel weisen in vorteilhafter Weise eine durchschnittliche Größe von 0,2 µm bis 15 µm und bevorzugt etwa 10 µm auf. Eine bevorzugte Partikelverteilung stellt sich derart dar, dass 10 Prozent der Partikel eine Teilchengröße von 0,72 µm oder weniger und/oder 50 Prozent der Partikel eine Teilchengröße von etwa 3 µm oder weniger und/oder 90 Prozent der Partikel eine Größe von etwa 9,33 µm oder weniger aufweisen. Ferner benötigt das erfindungsgemäße Verfahren nur 50% bis 60% der Energie, die bei den herkömmlich eingesetzten Kugelmühlen erforderlich ist. Somit wird in vorteilhafter Weise mit deutlich verringertem Energieeinsatz ein Bindemittel für Beton geschaffen, das erheblich verbesserte Eigenschaften aufweist und die Tragfähigkeit des Betons deutlich erhöht oder eine Verringerung der erforderlichen Menge ermöglicht. Beispielsweise konnte bei ersten Versuchen die bislang übliche Menge von 300 kg Zement pro Kubikmeter Beton auf 220 kg bis 250 kg gesenkt werden, wobei die Tragfähigkeit des Betons beibehalten wurde.

Bevorzugte Weiterbildungen des erfindungsgemäßen Verfahrens sind in den weiteren Ansprüchen beschrieben.

Derzeit wird bevorzugt, die durch den Gasstrom transportierten Feinanteile des Mahlguts zu einem Zyklon zu fördern, in dem im Wesentlichen eine weitere Trennung erfolgt, wobei die verbleibenden Grobanteile bevorzugt in die Mühle zurückgeführt werden.

Für die weitere Förderung der Feinanteile ist bevorzugt ein sogenannter Sichter vorgesehen, der wiederum für einen Weitertransport der Feinanteile, bevorzugt zu einem weiteren Zyklon und von dort zu einer Lagereinrichtung, wie z.B. einem Silo sorgt.

Wie vorangehend bereits erwähnt, werden die in der Mühle und/oder dem Zyklon und/oder dem Sichter und/oder dem weiteren Zyklon verbleibenden Grobanteile in eine der jeweils vorgeschalteten Komponenten rezirkuliert.

Bei Versuchen hat sich ferner herausgestellt, dass im Hinblick auf das Mahlgut eine Mindesthärte vorteilhaft ist, die derjenigen von Kalkstein entspricht. Insbesondere hat sich eine Mindest-Ritzhärte von 3 Mohs als vorteilhaft herausgestellt. Bei derartigen Härten wurde eine besonders gute Zerkleinerung des Mahlgutes festgestellt.

Die Lösung der oben genannten Aufgabe erfolgt ferner durch die im Anspruch 6 beschriebene Vorrichtung. Entsprechend dem erfindungsgemäßen Verfahren weist diese zumindest eine Mühle mit zumindest zwei gegenläufigen Mahlscheiben auf. Ferner ist zumindest ein Ventilator vorgesehen, der geeignet ist, einen Gasstrom mit 10.000 bis 13.000 m³/h pro 10 t Mahlgut pro Stunde in die Mühle einzublasen, um zumindest die Feinanteile des Mahlguts weiterzutransportieren. Bevorzugte Weiterbildungen der erfindungsgemäßen Vorrichtung entsprechen im Wesentlichen denjenigen des erfindungsgemäßen Verfahrens und führen zu den entsprechenden Vorteilen. An dieser Stelle sei ferner erwähnt, dass sämtliche im Zusammenhang mit dem erfindungsgemäßen Verfahren beschriebenen Merkmale auf die erfindungsgemäße Vorrichtung anwendbar sind und umgekehrt. Darüber hinaus werden im Hinblick auf die verfahrensgemäße Vorgehensweise und die Details der hierbei verwendeten Vorrichtungen die Offenbarung der DE 28 29 272 A1, DE 196 37 680 A1, DE 28 27 912 A1, DE 28 28 053 A1, DE 28 27 944 A1, DE 28 27 945 C2 und DE 195 48 645 A1 zum Gegenstand der Anmeldung gemacht.

Mit der Erfindung wird ferner erstmalig ein mineralischer Stoff mit den Eigenschaften des Anspruchs 9 geschaffen. Hierdurch ergeben sich die oben genannten Vorteile für die Verwendung beispielsweise als Beton-Bindemittel. Es gilt jedoch auch für Zeolithe, die in Futtermittel verwendet werden, sowie für Aluminiumoxid, dass bei dessen Anwendungen hohe Feinheiten vorteilhaft sind.

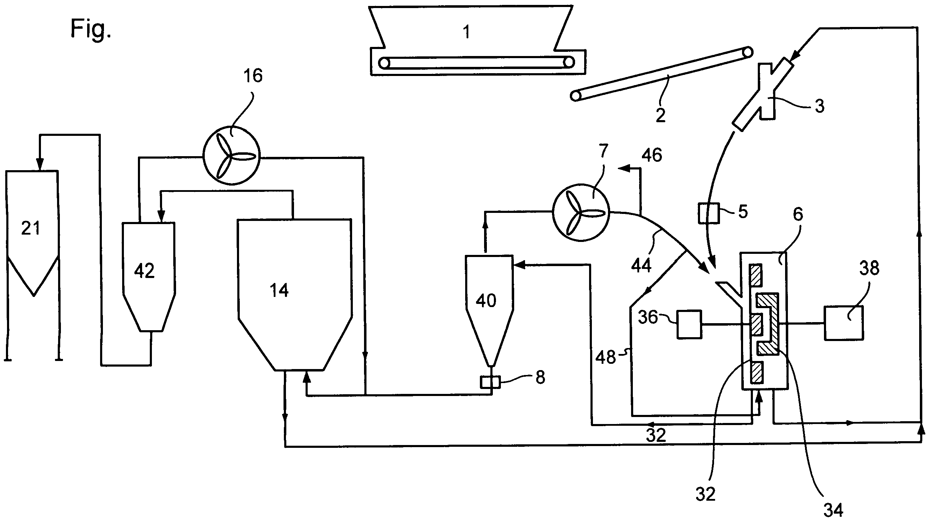

### Kurze Beschreibung der Zeichnung

Nachfolgend wird ein beispielhaft in der Zeichnung dargestelltes Ausführungsbeispiel der Erfindung näher erläutert.

Die Figur zeigt schematisch den Aufbau der erfindungsgemäßen Vorrichtung mit den wesentlichen Komponenten.

### Ausführliche Beschreibung einer bevorzugten Ausführungsform der Erfindung

Zu der Figur sei vorab erwähnt, dass der Materialfluss im Wesentlichen gegen den Uhrzeiger erfolgt, und dass das angestrebte, besonders feine Material mit Ausnahme der Situation an dem nachfolgend beschriebenen sogenannten Sichter 14 stets an der Unterseite der Mühle bzw. der Zyklone abgegeben und weitertransportiert wird. Ausgangspunkt ist jedoch ein sogenannter Austragungsbunker 1, in den das Ausganasmaterial, beispielsweise Hüttensand und/oder Kalkstein mit einer Partikelgröße von beispielsweise bis zu 4 mm, beispielsweise durch einen Radlader von einer Lagerstelle aufgegeben wird. Ein Zuführband 2, von dem gegebenenfalls zwei oder mehr Zuführbänder vorhanden sein können, fördern den mineralischen Stoff zu einem Verteiler 3, der das Material auf zwei oder mehr Mühlen verteilen kann. Es sei erwähnt, dass anstelle der oben genannten Komponenten 1 bis 3 ein oder mehrere Silos vorhanden sein können, aus denen beispielsweise mittels einer Schnecke das Material in die Mühle(n) eingebracht wird. Bei dem gezeigten Ausführungsbeispiel erfolgt die Verteilung auf zwei Mühlen, von denen nur eine dargestellt ist. Es können jedoch auch mehr Mühlen vorgesehen sein. Eine oder mehrere Zuleitungen zu den Mühlen können durch (nicht gezeigte) Förderschnecken gebildet sein oder diese beinhalten. Eine sogenannte Zellenradschleuse 5 ist der Mühle 6 vorgeschaltet, die, wie in der Zeichnung schematisch angedeutet, im Wesentlichen zwei Mahlscheiben 32, 34 aufweist, die ineinander greifen. Hierzu weist bei dem gezeigten Beispiel die eine (linke) Mahlscheiben einen mittleren und einen äußeren Bereich auf, zwischen denen ein vorstehender ringförmiger Steg der anderen (rechten) Mahlscheibe 34 eingreift. Entsprechend ist der äußere Bereich der Mahlscheibe 32 ebenfalls ring- und der mittlere Bereich im Wesentlichen kreisförmig. Es versteht sich, dass an beiden Mahlscheiben weitere im Wesentlichen ringförmige Stege vorgesehen sein können, die zwischen Stege der jeweils anderen Mahlscheibe eingreifen.

Mit "36" bzw. "38" sind die jeweiligen Motoren bezeichnet, welche die Mahlscheiben 32, 34 gegenläufig antreiben und beispielsweise eine Leistung von 90 kW bis 110 kW aufweisen können. Mit "7" ist ein Ventilator bezeichnet, der beispielsweise mit einem Gesamtdruck von 5 kPa oder bevorzugt bis zu 7 kPa eine Luftmenge von beispielsweise 11500 m³/h abgibt und teilweise in die Mühle 6 bläst, so dass in dem gezeigten Fall am unteren Ende der Mühle die feinen Anteile des Mahlgutes die Mühle mit diesem Luftmassenstrom und beispielsweise einer Geschwindigkeit von 26 m/s über die Leitung 32 verlassen. Bevorzugt zweigt von der Leitung 44 nach der Leitung 46 eine Leitung 48 ab, die zum (unteren) Austragsbereich der Mühle 6 geführt wird und dort zusammen mit dem (von oben) in die Mühle eingebrachten Luftmassenstrom für einen Abtransport des Feinanteils über die Leitung 32 sorgt. Bevorzugte Luftmassenströme in den jeweiligen Leitungen sind unten angegeben. Zu der genannten Luftmenge sowie sämtlich hierin genannten Luftmengen sei erwähnt, dass sie um +/- 10 bis 20 Prozent abweichen können und sich auf etwa 10 t/h in eine Mühle eingebrachtes Mahlgut beziehen. Dementsprechend sind die Luftströme zumindest annähernd mit dem entsprechenden Faktor zu multiplizieren, wenn die Mühle derart vergrößert wird, dass sich die Menge des einzubringenden Mahlgutes um einen bestimmten Faktor erhöht. Zu sämtlichen angegebenen Gas- oder Luftgeschwindigkeiten sei darauf hingewiesen, dass die Luftgeschwindigkeit am Eingang einer jeweiligen Komponente im Extremfall Null betragen kann und bevorzugt innerhalb von plus 10 Prozent des angegebenen Wertes liegt. Bei den Luftgeschwindigkeiten am Ausgang einer jeweiligen Komponente handelt es sich um Mindest-Luftgeschwindigkeiten. Der Ventilator kann durch Klappen gesteuert sein, und das der Mühle zugeführte Gas ist typischerweise Frischluft. Die Grobanteile des Mahlgutes können beispielsweise durch eine (nicht gezeigte) Schnecke ausgetragen und zu einer (nicht gezeigten) Sammelschnecke befördert werden. Diese Sammelschnecke fördert, gegebenenfalls über einen zusätzlichen sogenannten Elevator, das Material zurück zu dem Verteiler 3 und/oder (nicht gezeigt) zu dem Austragungsbunker 1.

Das mit dem Luftmassenstrom abgeführte, feine Mahlgut wird zu einem Zyklon 40 transportiert, in dem das Mahlgut wieder in feine und grobe Anteile aufgetrennt wird. Die groben Anteile enthaltende Abluft wird, beispielsweise nach obenhin, in den durch den Ventilator 7 angetriebenen Kreislauf eingeleitet, und die feinen Anteile werden über eine Zellenradschleuse 8 zu einem sogenannten Sichter 14 transportiert.

Der Sichter 14 teilt das Material erneut in grobe und feine Anteile. In diesem Fall verlassen die groben Anteile den Sichter an der Unterseite und werden in dem gezeigten Fall nicht zur unmittelbar davorliegenden Komponente, nämlich dem Zyklon 40, sondern bis zu einer (nicht gezeigten) Sammelschnecke zurückgeführt, zu der auch die Grobanteile aus der Mühle transportiert werden.

Die gewünschten feinen Anteile verlassen den Sichter 14 in dem gezeigten Fall am oberen Ende mit einem Gasmassenstrom von etwa 22000 m³/h und einer Geschwindigkeit von etwa 25 m/s und werden zu einem weiteren Zyklon 42 transportiert. von dort werden die feinen Anteile am unteren Ende über eine (nicht gezeigte) Zellenradschleuse in eine (nicht gezeigte) Schnecke gefördert und beispielsweise mittels eines (nicht gezeigten) Elevators in ein Silo 21 transportiert. Zur Lagerung unterschiedlicher Stoffe können mehrere Silos vorhanden sein. Die verbleibenden groben Anteile verlassen den Zyklon 42 in dem gezeigten Fall an der Oberseite und werden in den Sichter 14 zurückgeführt.

An verschiedenen Stellen der Anlage, beispielsweise zwischen dem Ventilator 7 und der Mühle 6 und zwischen einem Ventilator 16, der zwischen dem Zyklon 42 und dem Sichter 14 vorhanden ist, und dem Sichter 14, entsteht Abluft, die zusammen mit einer allgemeinen Entstaubungsleitung der Anlage einem (nicht gezeigten) Filter zugeführt wird, der die in der Abluft befindlichen feinen Anteile von mineralischem Material herausfiltert und der (nicht gezeigten) Schnecke zuführt, die dem Zyklon 42 nachgelagert ist und das Material in Richtung des Silos 21 fördert. Zwischen dem Filter und der Schnecke und/oder dem Zyklon 42 und der Schnecke und/oder dem Zyklon 40 und dem Sichter 14 kann jeweils eine Zellenradschleuse vorhanden sein.

Wie erwähnt, weist der Ventilator 7 beispielsweise eine Leistung von 30 kW auf und fördert 11500 m³ Gas pro Stunde bei einem Gesamtdruck von 5 KPa. Der hierdurch ausgebildete Kreislauf stellt sich so dar, dass von der Leitung 44 zwischen Ventilator 7 und Mühle 6 eine Leitung 46 abzweigt, die beispielsweise 5000 m³/h bei einer Geschwindigkeit von 17 m/s fördert und zu dem Filter führt. Die Leitung 44 verzweigt sich ein weiteres Mal, und zu der Mühle 6 werden beispielsweise 2000 m³/h bei einer Geschwindigkeit von 20 m/s gefördert, während etwa 4500 m³/h bei 20 m/s zum (unten gelegenen) Austragsbereich der Mühle 6 führen und in die Leitung 32 münden, mit der die feinen Anteile von der Mühle 6 zu dem Zyklon 40 transportiert werden. Dieser Bereich der Anlage, der im Wesentlichen durch den Ventilator 7 betrieben wird, kann im Übrigen ein zweites oder mehrere Male parallel vorgesehen sein, so dass im Wesentlichen aus weiteren Zyklonen Material zu dem Sichter geführt wird, und verbleibende Grobanteile zu dem Verteiler 3 zurückgeführt werden.

Der Ventilator 16 fördert beispielsweise 22000 m³/h unter einem Gesamtdruck von 5 KPa und mit einer Leistung von beispielsweise 75 kW, wobei zu dem Filter 5000 m³/h bei einer Geschwindigkeit von 17 m/s, und zu dem Sichter 17000 m³/h bei einer Geschwindigkeit von 19 m/s gefördert werden. Am oberen Bereich des Sichters werden 22000 m³/h bei einer Geschwindigkeit von 25 m/s abgeführt und dem Zyklon 42 zugeführt. Der Kreislauf wird durch die Verbindung vom oberen Bereich des Zyklons 42 zu dem Ventilator 16 geschlossen. Allgemein kann gesagt werden, dass für eine Tonne pneumatisch zu transportierendes Material ein Luftstrom von der zwei- bis dreifachen Menge an Kubikmeter Luft, also beispielsweise 2,6 bis 2,7 m³/h erforderlich ist.

Bei dem Sichter kann es sich beispielsweise um einen "Classiclon Luftstrom-Hochleistungssichter CC22R" der PM Technologies 8200 Gleisdorf, Österreich handeln. Der Filter ist beispielsweise unter der Bezeichnung "CDR-M12-05-4500-05" von CEATEC Engineering GmbH, 4910 Ried im Innkreis, Österreich erhältlich.

Es sei abschließend erwähnt, dass sämtliche hierin beschriebenen Merkmale des Verfahrens, der Vorrichtung und des Produkts als erfindungswesentlich anzusehen sind, und unabhängig voneinander und in beliebiger Weise kombiniert, gegebenenfalls auch ohne die Merkmale der unabhängigen Ansprüche, vorteilhafte Verfahren, Vorrichtungen und Produkte beschreiben, die als Gegenstand der Anmeldung anzusehen sind. Die Anmeldung betrifft insbesondere die folgenden Verfahren, Vorrichtungen und Produkte. Auch wenn die Absätze 2 ff. von "Ansprüchen" abhängig sind, sind die nachfolgenden Absätze nicht als Patentansprüche der Anmeldung zu verstehen.
1. Verfahren zum Zerkleinern von mineralischen Stoffen, bei dem das Mahlgut zwischen gegenläufigen Mahlscheiben (32, 34) gemahlen und mittels eines Gasstroms mit von 10.000 bis 13.000 m³/h und/oder einer Geschwindigkeit von mindestens 26 m/s weitertransportiert wird.
2. Verfahren nach Anspruch 1,
   **dadurch gekennzeichnet, dass**
   das Mahlgut zu einem Zyklon weitertransportiert wird.
3. Verfahren nach Anspruch 1 oder 2,
   **dadurch gekennzeichnet, dass**
   das Mahlgut zu einem Sichter weitertransportiert wird.
4. Verfahren nach einem der vorangehenden Ansprüche, **dadurch gekennzeichnet, dass** die in der Mühle und/oder dem Zyklon und/oder dem Sichter verbleibende Grobanteile des Mahlgutes rezirkuliert werden.
5. Verfahren nach einem der vorangehenden Ansprüche, **dadurch gekennzeichnet, dass** das Mahlgut mindestens die Härte von Kalkstein und/oder mindestens eine Ritzhärte von 3 nach Mohs aufweist.
6. Vorrichtung zum Zerkleinern von mineralischen Stoffen mit zumindest einer Mühle (6) mit gegenläufigen Mahlscheiben (32, 34) und zumindest einem Ventilator (7), der geeignet ist, einen Gasstrom mit mindestens 10.000 m³/h und/oder einer Geschwindigkeit von mindestens 20 m/s in die Mühle einzublasen, um das Mahlgut weiterzutransportieren.
7. Vorrichtung nach Anspruch 6,
   ferner mit einem Zyklon (40), von dem bevorzugt mittels des Ventilators (7) Gas mit Mahlgut, bevorzugt mit von 10.000 bis 13.000 m³/h und/oder einer Geschwindigkeit von mindestens 20 m/s abgesaugt wird.
8. Vorrichtung nach Anspruch 6 oder 7,
   ferner mit einem Sichter und einem Ventilator, der den Sichter mit einem Gasstrom mit von 15.000 bis 19.000 m³/h und/oder einer Geschwindigkeit von mindestens 19 m/s beaufschlagt.
9. Mineralischer Stoff, wie z.B. Hüttensand, Kalkstein, Aluminiumoxid (Al₃O₃) oder Zeolithe, mit einer Feinheit von mehr als 5000, bevorzugt mehr als 8000 und insbesondere bis zu 14000 Blaine und/oder einer Partikelgröße von 0,2 µm bis 10 µm.

## Patentansprüche

1. Verfahren zum Zerkleinern von mineralischen Stoffen, bei dem das Mahlgut zwischen gegenläufigen Mahlscheiben (32, 34) gemahlen und mittels eines Gasstroms mit von 10.000 bis 13.000 m³/h und/oder einer Geschwindigkeit von mindestens 26 m/s weitertransportiert wird.

2. Verfahren nach Anspruch 1,
**dadurch gekennzeichnet, dass** das Mahlgut zu einem Zyklon weitertransportiert wird.

3. Verfahren nach Anspruch 1 oder 2,
**dadurch gekennzeichnet, dass** das Mahlgut zu einem Sichter weitertransportiert wird.

4. Verfahren nach einem der vorangehenden Ansprüche,
**dadurch gekennzeichnet, dass** die in der Mühle und/oder dem Zyklon und/oder dem Sichter verbleibende Grobanteile des Mahlgutes rezirkuliert werden.

5. Verfahren nach einem der vorangehenden Ansprüche,
**dadurch gekennzeichnet, dass** das Mahlgut mindestens die Härte von Kalkstein und/oder mindestens eine Ritzhärte von 3 nach Mohs aufweist.

6. Vorrichtung zum Zerkleinern von mineralischen Stoffen mit zumindest einer Mühle (6) mit gegenläufigen Mahlscheiben (32, 34) und zumindest einem Ventilator (7), der geeignet ist, einen Gasstrom mit mindestens 10.000 m³/h und/oder einer Geschwindigkeit von mindestens 20 m/s in die Mühle einzublasen, um das Mahlgut weiterzutransportieren.

7. Vorrichtung nach Anspruch 6,
ferner mit einem Zyklon (40), von dem bevorzugt mittels des Ventilators (7) Gas mit Mahlgut, bevorzugt mit von 10.000 bis 13.000 m³/h und/oder einer Geschwindigkeit von mindestens 20 m/s abgesaugt wird.

8. Vorrichtung nach Anspruch 6 oder 7,
ferner mit einem Sichter und einem Ventilator, der den Sichter mit einem Gasstrom mit von 15.000 bis 19.000 m³/h und/oder einer Geschwindigkeit von mindestens 19 m/s beaufschlagt.

9. Mineralischer Stoff, wie z.B. Hüttensand, Kalkstein, Aluminiumoxid (Al₃O₃) oder Zeolithe, mit einer Feinheit von mehr als 5000, bevorzugt mehr als 8000 und insbesondere bis zu 14000 Blaine und/oder einer Partikelgröße von 0,2 µm bis 10 µm.
